# EUROPEAN PATENT APPLICATION

(11) **EP 4 843 806 A1**
(43) Date of publication of application: **25.11.2026**
(21) Application number: 26176268.6
(22) Date of filing: 04.05.2026
(51) Int. Cl.: B60K 1/04, B60K 15/067, H01M 50/262

(54) **POWER STORAGE DEVICE AND VEHICLE**

(30) Priority: 21.05.2025 JP 2025084780
(71) Applicant: Prime Planet Energy & Solutions, Inc., Chuo-ku, Tokyo 103-0022 (JP)
(72) Inventor: OKUDA, Yutaka, Tokyo, 103-0022 (JP); ASAKURA, Jun, Tokyo, 103-0022 (JP); TERAUCHI, Shinobu, Tokyo, 103-0022 (JP); NOSAKI, Shuya, Tokyo, 103-0022 (JP); FURUKAWA, Kimihiko, Tokyo, 103-0022 (JP)
(74) Representative: Kuhnen & Wacker Patent- und Rechtsanwaltsbüro PartG mbB

(57) **Abstract**

A support structure (4) of the present power storage device (2) includes a pair of support mechanisms (4A) provided at positions facing each other with the power storage device (2) being interposed therebetween, the support mechanisms (4A) have release mechanisms (400) that each release the support of the power storage device (2) when receiving an impact from outside, when the release mechanism (400) is operated in one of the support mechanisms (4A), the power storage device (2) is supported on the vehicle body (1) in an inclined state with the support of the power storage device (2) being maintained only by the other of the support mechanisms (4A) and the support of the power storage device (4A) being released by the one of the support mechanisms (4A).

## Description

### CROSS REFERENCE TO RELATED APPLICATIONS

This nonprovisional application is based on Japanese Patent Application No. 2025-084780 filed on May 21, 2025 with the Japan Patent Office, the entire contents of which are hereby incorporated by reference.

### BACKGROUND OF THE INVENTION

### Field of the Invention

The present technology relates to a power storage device and a vehicle.

### Description of the Background Art

For example, each of Japanese Patent Laying-Open No. 2013-32066 and Japanese Patent Laying-Open No. 2019-162908 discloses the following technique: when a load (external force) is applied to a vehicle including a power storage device at the time of a collision, the load is concentrated on a bracket fastened to the power storage device and the fastening of the bracket to the power storage device is released, thereby reducing damage to the power storage device.

### SUMMARY OF THE INVENTION

Although it is possible to reduce the damage to the power storage device by causing the power storage device to fall onto the ground at the time of the collision of the vehicle, there is still a concern that the power storage device may be damaged when the power storage device falls onto the ground.

Further, when the power storage device is completely detached from the vehicle, the power storage device may receive an impact when fallen or an impact from a vehicle coming after the foregoing vehicle, with the result that an electrolyte solution may be leaked from a power storage cell (battery cell) accommodated inside the power storage device.

It is an object of the present technology to provide a power storage device and a vehicle so as to further suppress damage to the power storage device when a load (external force) is applied to a vehicle on which the power storage device is mounted.

The present technology provides the following power storage device and vehicle.
[1] A power storage device supported on a vehicle body of a vehicle through a support structure, wherein the support structure includes a pair of support mechanisms provided at positions facing each other with the power storage device being interposed between the support mechanisms, the support mechanisms have release mechanisms that each release the support of the power storage device when receiving an impact from outside, and when the release mechanism is operated in one of the support mechanisms, the power storage device is supported on the vehicle body in an inclined state with the support of the power storage device being maintained only by the other of the support mechanisms and the support of the power storage device being released by the one of the support mechanisms.
[2] The power storage device according to [1], wherein the vehicle body includes a pair of frames disposed to sandwich the power storage device laterally, the power storage device includes a support plate that supports the power storage device and that has extension regions extending to positions facing the frames, and the release mechanisms are provided between the frames and the extension regions on both sides with respect to the power storage device.
[3] The power storage device according to [2], wherein each of the release mechanisms includes an engagement member engaged with a side of a corresponding one of the frames, and a fixing member that is provided on a side of a corresponding one of the extension regions and that fixes the extension region to the engagement member, and when the release mechanism is operated, the engagement member is broken to disengage the engagement of the engagement member with the frame and release the support of the power storage device by the release mechanism.
[4] The power storage device according to [3], wherein the engagement member is provided at the release mechanism so as to be replaceable.
[5] The power storage device according to any one of [1] to [4], wherein the pair of support mechanisms are provided to face each other in a lateral direction of the vehicle body.
[6] The power storage device according to any one of [1] to [4], wherein the pair of support mechanisms are provided to face each other in a frontward/rearward direction of the vehicle body.
[7] A vehicle comprising the power storage device according to any one of [1] to [6].

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a side view schematically showing an example of a vehicle on which a power storage device is mounted.
Fig. 2 is a first conceptual diagram schematically showing functions and effects of the present technology.
Fig. 3 is a second conceptual diagram schematically showing the functions and effects of the present technology.
Fig. 4 is a cross sectional view showing a support structure for supporting the power storage device on a vehicle body according to a first embodiment.
Fig. 5 is an enlarged view of a region surrounded by V in Fig. 4.
Fig. 6 is a first perspective view of an engagement member according to the first embodiment.
Fig. 7 is a second perspective view of the engagement member according to the first embodiment.
Fig. 8 is a first cross sectional view showing an operation of a release mechanism.
Fig. 9 is a second cross sectional view showing the operation of the release mechanism.
Fig. 10 is a schematic side view showing a support structure for supporting a power storage device on a vehicle body according to a second embodiment.
Fig. 11 is a schematic plan view showing a structure for supporting the power storage device on a vehicle body according to the second embodiment.

### DESCRIPTION OF THE PREFERRED EMBODIMENTS

Hereinafter, embodiments of the present technology will be described. The same or corresponding portions are denoted by the same reference characters, and may not be described repeatedly.

In the embodiments described below, when reference is made to number, amount, and the like, the scope of the present technology is not necessarily limited to the number, amount, and the like unless otherwise stated particularly. In the embodiments described below, each component is not necessarily essential to the present technology unless otherwise stated particularly. The present technology is not limited to one that necessarily exhibits all the functions and effects stated in the present embodiment.

In the present specification, the terms "comprise", "include", and "have" are open-end terms. That is, when a certain configuration is included, a configuration other than the foregoing configuration may or may not be included.

In the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

Sizes such as width, length, and diameter of each member illustrated in the present specification are not limited to those shown in the figures, and can be appropriately changed. In the present specification, ordinal numbers such as "first" and "second" may be given to respective configurations, but these ordinal numbers do not limit priority, order, or the like unless explicitly defined.

The power storage device used in the present specification means a device that can be charged and discharged, and a power storage cell (battery cell) accommodated therein is not limited to a lithium ion battery, and may include other batteries such as a nickel-metal hydride battery and a sodium-ion battery.

The power storage device is mounted on a hybrid electric vehicle (HEV), a plug-in hybrid electric vehicle (PHEV), a battery electric vehicle (BEV), or the like, but is not limited to being mounted on a vehicle.

### (Vehicle 1000)

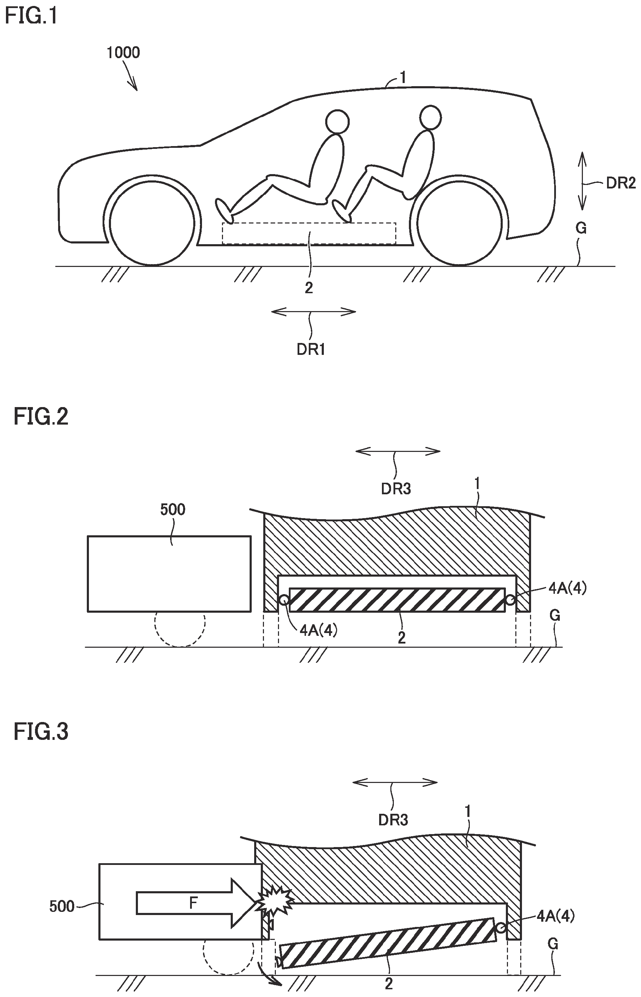

Fig. 1 is a side view schematically showing an example of a vehicle 1000 on which a power storage device 2 is mounted. In Fig. 1 and each of figures described later, "DR1" indicates a frontward/rearward direction of vehicle 1000, "DR2" indicates an upward/downward direction of vehicle 1000, and "DR3" indicates a width direction of vehicle 1000.

As shown in Fig. 1, vehicle 1000 includes a vehicle body 1 and power storage device 2. Power storage device 2 is mounted on a lower portion of vehicle body 1. Power storage device 2 may be a battery pack having a cell-to-pack (CTP) structure in which the battery cells are directly supported on a side wall of the housing, or may be a power storage device having a cell-to-chassis (CTC) structure in which the battery cells are directly incorporated in a frame of vehicle body 1.

### (First Embodiment: Support Mechanism 4A)

Referring to Figs. 2 and 3, a support structure 4 for supporting power storage device 2 on vehicle body 1 (frame) of vehicle 1000 will be described. Support structure 4 includes a pair of support mechanisms 4A provided at positions facing each other with power storage device 2 being interposed therebetween. Each of Figs. 2 and 3 shows a case where the pair of support mechanisms 4A are provided to face each other in the lateral direction (DR3) of vehicle body 1, but they may be provided to face each other in the frontward/rearward direction (DR1) of vehicle body 1.

Support mechanisms 4A have release mechanisms 400 that each release the support of power storage device 2 when receiving an impact from outside. When release mechanism 400 is operated in one of support mechanisms 4A (when another vehicle 500 laterally collides therewith from the left side in the figure) (see Fig. 2), the support of power storage device 2 is maintained only by the other of support mechanisms 4A (right side in the figure) and the support of power storage device 2 is released by the one of support mechanisms 4A in which release mechanism 400 has been operated. As a result, power storage device 2 is supported on vehicle body 1 in an inclined state (see Fig. 3).

The positions at which support mechanisms 4A are provided are not particularly limited; however, since power storage device 2 has a rectangular shape when vehicle body 1 is viewed in a plan view toward a ground G, support mechanisms 4A may be provided at four positions in the vicinity of the four corners of power storage device 2, for example.

The other of support mechanisms 4A that supports power storage device 2 in the state in which power storage device 2 is inclined has a structure designed to avoid the inclined side of power storage device 2 from being brought into abutment with ground G. It may be designed to provide a stopper such that the inclination angle of power storage device 2 is equal to or less than a certain angle. With this configuration, it is possible to prevent power storage device 2 from falling onto (bring brought into contact with) ground G. As a result, power storage device 2 can be avoided from being damaged.

### (Support Mechanism 4A)

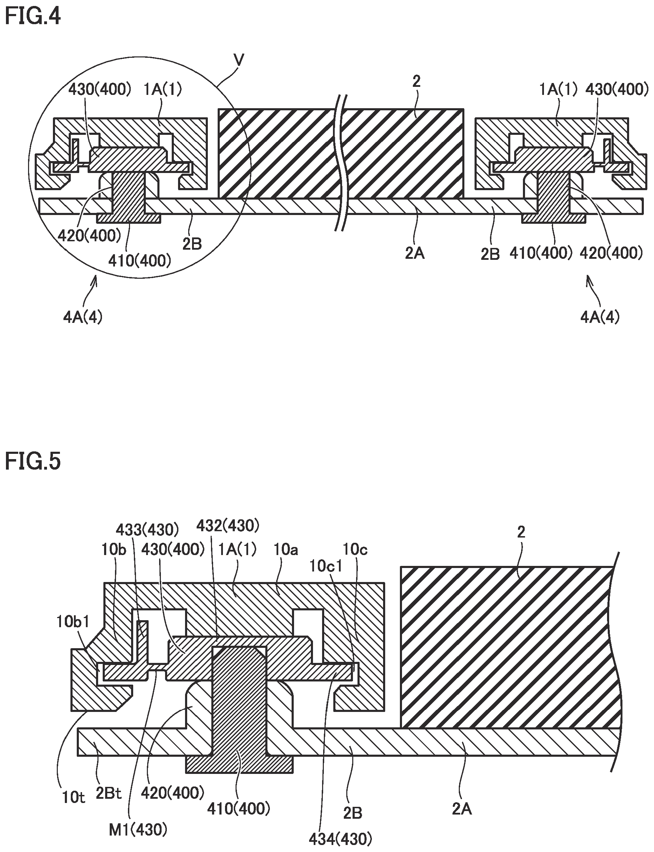

A detailed structure of each of support mechanisms 4A will be described with reference to Figs. 4 to 7. Vehicle body 1 includes a pair of frames 1A disposed to sandwich power storage device 2 laterally. The pair of frames 1A are provided to extend in the DR1 direction so as to sandwich power storage device 2 laterally. Each of frames 1A has a gate-like cross sectional shape that opens downward. The pair of frames 1A have forms symmetrical to each other with power storage device 2 being interposed therebetween.

In the cross sectional shape, frame 1A has: an upper frame 10a as well as an outer frame 10b and an inner frame 10c located on both sides with respect to upper frame 10a and each extending downward. An abutment frame 10d extending downward is provided at a central portion of upper frame 10a. Outer frame 10b is provided with an outer frame engagement groove 10b1 recessed in the thickness direction. Inner frame 10c is provided with an inner frame engagement groove 10c1 recessed in the thickness direction. An engagement member 430 is attached between outer frame engagement groove 10b1 and inner frame engagement groove 10c1.

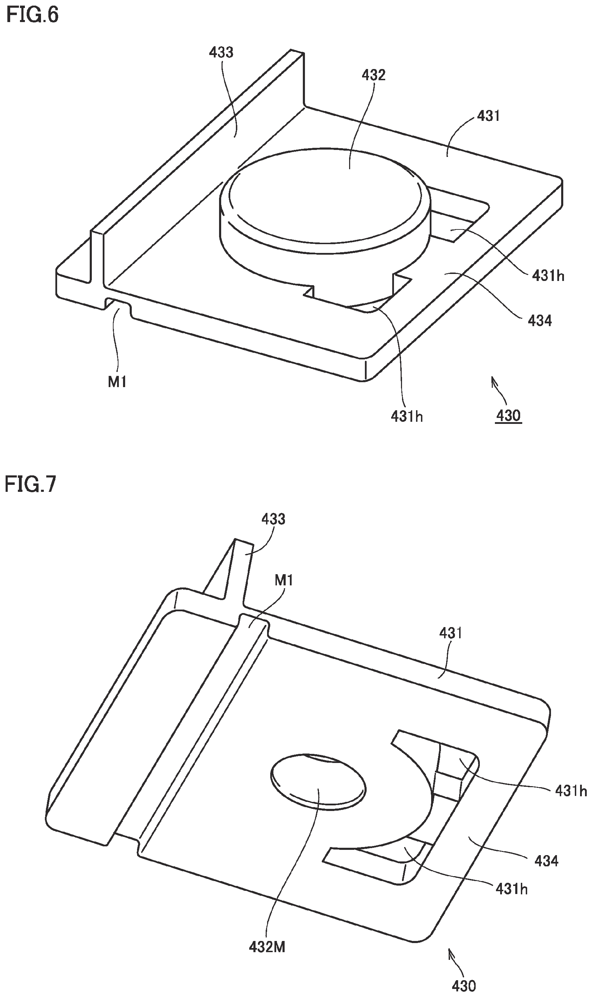

As shown in Figs. 6 and 7, engagement member 430 is a resin molded product. Engagement member 430 includes a base plate 431 having a rectangular shape. One side of base plate 431 is provided with an outer engagement side 433 having an L-shaped cross section to be engaged with outer frame engagement groove 10b1. A groove M1 is provided at a joining region between outer engagement side 433 and base plate 431, as a fragile region in which the thickness of base plate 431 is thin.

A cylindrical portion 432 in which an internal thread 432M is provided is provided at a central region of base plate 431. The other side of base plate 431 is provided with an inner engagement side 434 engaged with inner frame engagement groove 10c1. Two through holes 431h are provided between cylindrical portion 432 and inner engagement side 434. Through holes 431h are provided as necessary, and the number thereof can also be appropriately changed.

Referring again to Figs. 4 and 5, power storage device 2 is fixedly supported on a support plate 2A from below. Support plate 2A has extension regions 2B extending to positions facing frames 1A located beside power storage device 2. Engagement member 430 is attached between outer frame engagement groove 10b1 and inner frame engagement groove 10c1 of frame 1A at a region at which frame 1A and extension region 2B face each other.

Further, a bolt 410 is inserted into cylindrical region 420 provided in extension region 2B from the lower surface side, and is screwed into internal thread 432M provided in engagement member 430. Thus, extension region 2B is fixed to frame 1A. That is, power storage device 2 is fixed to frame 1A. Release mechanism 400 is at least constituted of engagement member 430, cylindrical region 420, and bolt 410 provided between frame 1A and extension region 2B.

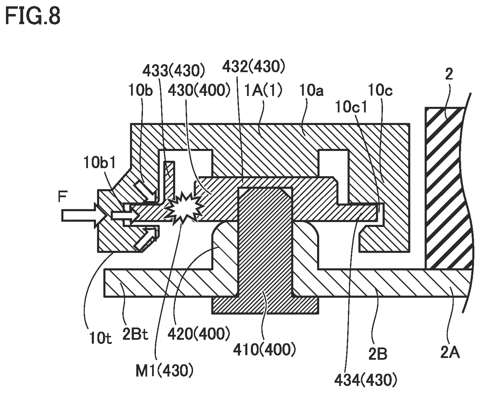

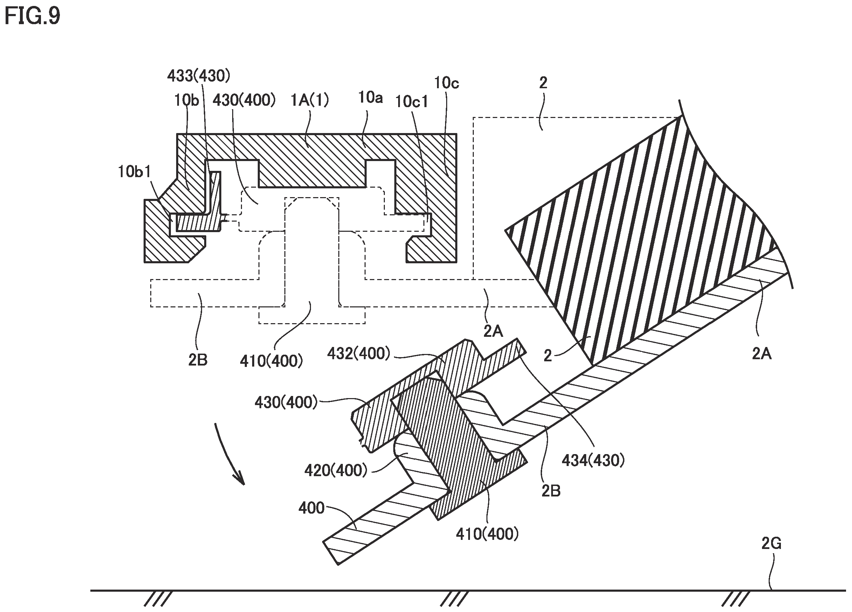

Referring to Figs. 8 and 9, the following describes a state in which when release mechanism 400 is operated in one of support mechanisms 4A, power storage device 2 is supported on vehicle body 1 in the inclined state with the support of power storage device 2 being maintained only by the other of support mechanisms 4A and the support of power storage device 2 being released by the one of support mechanisms 4A.

The state shown in Fig. 8 is a state in which the vehicle is collided to apply an external force F to the one of support mechanisms 4A so as to operate release mechanism 400. In this case, the L-shaped outer engagement side 433 of engagement member 430 is pressed inward to concentrate stress on groove M1. Since groove M1 is a more fragile region than the other regions, groove M1 is fractured. As a result, as shown in Fig. 9, inner engagement side 434 of engagement member 430 is detached from inner frame engagement groove 10c1 and extension region 2B falls downward, with the result that power storage device 2 is supported on vehicle body 1 in the inclined state.

On this occasion, power storage device 2 is supported on vehicle body 1 in the inclined state by the other of support mechanisms 4A, and power storage device 2 may be supported in a state in which power storage device 2 is separated from ground G. For example, a load design for release mechanism 400 constituted of bolt 410, cylindrical region 420, and engagement member 430 may be made in view of the weight of power storage device 2 such that power storage device 2 can be supported in a cantilever state away from ground G. Alternatively, a stopper or the like that controls the inclination angle of power storage device 2 when power storage device 2 is inclined may be provided on the support side.

With this configuration, it is possible to prevent power storage device 2 from falling onto (being brought into contact with) ground G, thereby avoiding damage to power storage device 2.

Further, since only engagement member 430 is broken in release mechanism 400 described above, power storage device 2 fixed to support plate 2A can be readily reused only by replacing bolt 410 and engagement member 430.

### (Second Embodiment: Support Mechanism 4B)

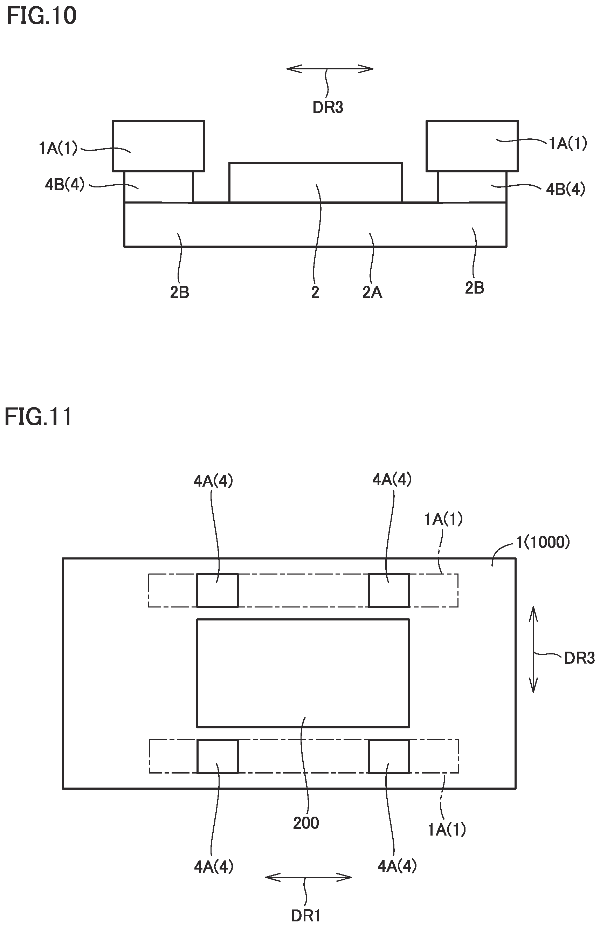

Each of support mechanisms 4B according to a second embodiment will be described with reference to Figs. 10 and 11. Support mechanism 4A described above uses the mechanical structure and inclines power storage device 2 fixed to support plate 2A by breaking engagement member 430.

On the other hand, the following describes a case where electric control is used for support mechanism 4B in the present embodiment. Support mechanism 4B of the present embodiment is provided at a region at which frame 1A and extension region 2B face each other. An electromagnet is used for support mechanism 4B, the electromagnet is disposed on the frame 1A side, and a member (for example, a plate composed of iron) attachable/detachable by magnetic force of the electromagnet is disposed on the extension region 2B side, for example.

The positions at which support mechanisms 4B are provided are not particularly limited; however, since power storage device 2 has a rectangular shape when vehicle body 1 is viewed in a plan view toward ground G, support mechanisms 4B may be provided at four positions in the vicinity of the four corners of power storage device 2, for example.

When a certain impact is detected at vehicle body 1, control for canceling the magnetic force of the electromagnet on the side on which the impact is detected (or the side on which the impact is large) is performed by current control. As a result, as in the case of the first embodiment, power storage device 2 fixed to support plate 2A can be supported with power storage device 2 being inclined.

Therefore, support structure 4 using support mechanism 4B according to the present embodiment can also attain the same functions and effects as those of support mechanism 4A according to the first embodiment described above.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A power storage device (2) supported on a vehicle body (1) of a vehicle (1000) through a support structure (4), wherein
the support structure (4) includes a pair of support mechanisms (4A) provided at positions facing each other with the power storage device (2) being interposed between the support mechanisms (4A),
the support mechanisms (4A) have release mechanisms (400) that each release the support of the power storage device (2) when receiving an impact from outside, and
when the release mechanism (400) is operated in one of the support mechanisms (4A), the power storage device (2) is supported on the vehicle body (1) in an inclined state with the support of the power storage device (2) being maintained only by the other of the support mechanisms (4A) and the support of the power storage device (4A) being released by the one of the support mechanisms (4A).

2. The power storage device according to claim 1, wherein
the vehicle body (1) includes a pair of frames (1A) disposed to sandwich the power storage device (2) laterally,
the power storage device (2) includes a support plate (2A) that supports the power storage device (2) and that has extension regions (2B) extending to positions facing the frames (1A), and
the release mechanisms (400) are provided between the frames (1A) and the extension regions (2B) on both sides with respect to the power storage device (2).

3. The power storage device according to claim 2, wherein
each of the release mechanisms (400) includes
an engagement member (430) engaged with a side of a corresponding one of the frames (1A), and
a fixing member (410) that is provided on a side of a corresponding one of the extension regions (2B) and that fixes the extension region (2B) to the engagement member (430), and
when the release mechanism (400) is operated, the engagement member (430) is broken to disengage the engagement of the engagement member (430) with the frame (1A) and release the support of the power storage device (2) by the release mechanism (400).

4. The power storage device according to claim 3, wherein
the engagement member (430) is provided at the release mechanism (400) so as to be replaceable.

5. The power storage device according to any one of claims 1 to 4, wherein
the pair of support mechanisms (4A) are provided to face each other in a lateral direction of the vehicle body (1).

6. The power storage device according to any one of claims 1 to 4, wherein
the pair of support mechanisms (4A) are provided to face each other in a frontward/rearward direction of the vehicle body (1).

7. A vehicle comprising the power storage device according to any one of claims 1 to 6.
